# FASCICULE DE BREVET EUROPEEN

(11) **EP 0 709 787 B1**
(45) Date de publication et mention de la délivrance du brevet: **20.06.2001**
(21) Numéro de dépôt: 95202813.2
(22) Date de dépôt: 18.10.1995
(51) Int. Cl.: G06F 15/16

(54) **Système de traitement d'informations comportant au moins deux processeurs**
Datenverarbeitungssystem mit minderstens zwei Prozessoren
Data processing system comprising at least two processors

(30) Priorité: 26.10.1994 FR 9412825
(43) Date de publication de la demande: 01.05.1996
(73) Titulaire: Koninklijke Philips Electronics N.V., 5621 BA Eindhoven (NL)
(72) Inventeur: Carbillet, Alain, Société Civile S.P.I.D., F-75008 Paris (FR)
(74) Mandataire: Chaffraix, Jean

(56) Documents cités:
- EP-A- 0 192 944
- EP-A- 0 535 822

## Description

La présente invention concerne un système de traitement d'informations comportant une pluralité de modules qui sont notamment constitués à partir d'un processeur et d'un bus local desservant différents périphériques.

L'invention concerne également un équipement de télécommunications comportant une pluralité de modules qui sont notamment constitués à partir d'un processeur et d'un bus local desservant différents périphériques, et notamment un multiplexeur de données en hiérarchie synchrone (SDH).

Dans de nombreux systèmes de traitement d'informations il est courant d'utiliser une pluralité de modules à base de processeur dans un but de redondance ou dans un but de partage du traitement des informations en vue d'augmenter la puissance du système. Il est par exemple possible de déporter une fonction consommatrice en temps de traitement sur un module dédié, ou, dans un équipement de télécommunications, d'utiliser un premier module dédié à la gestion de l'équipement, et un second module dédié à la gestion des communications.

Le problème qui se pose alors est celui de la mise en communication des différents modules.

La demande de brevet française FR-A-2667175 déposée par la demanderesse le 25.09.1990, décrit une méthode de mise en communication de différents processeurs par l'intermédiaire d'une mémoire commune dont l'accès est contrôlé par un circuit d'arbitrage.

Toutefois les circuits d'arbitrage qui sont actuellement disponibles sur le marché ne permettent de gérer que de la mémoire dynamique. Le champ d'application d'une telle méthode est donc limité.

L'invention a notamment pour but de proposer un système de traitement d'informations comportant une pluralité de modules, et dans lequel chaque processeur de chaque module a la possibilité d'accéder à l'ensemble des périphériques des autres modules: des mémoires dynamiques et statiques, des relais, des lampes électroluminescentes, des organes de communication...

Pour cela, un système de traitement d'informations selon l'invention et tel que défini dans le paragraphe introductif est caractérisé en ce qu'il comporte un bus inter-modules destiné à servir de lien temporaire entre deux modules, et connecté à chaque module par l'intermédiaire d'au moins un étage tampon bidirectionnel, et en ce que lesdits modules sont dotés de moyens permettant à un processeur de tout premier module de devenir temporairement maître du bus local de tout second module de façon à accéder directement aux périphériques dudit second module.

Lorsqu'il n'y a pas d'échange, chaque processeur est indépendant et travaille localement sur son propre bus en utilisant les ressources qui y sont connectées. En revanche lorsqu'un échange est nécessaire, par exemple lorsque le processeur d'un premier module veut lire la mémoire statique d'un second module, le processeur dudit second module est temporairement mis en attente, et celui dudit premier module devient maître du bus local dudit second module qui est mis en communication directe avec le bus local dudit premier module via des étages tampons bidirectionnels et un bus inter-module afin que l'échange de données ait lieu. Ainsi, la mémoire statique dudit second module est temporairement considérée comme un périphérique du processeur dudit premier module.

D'autres particularités, détails et avantages de la présente invention apparaîtront dans la description qui va suivre en regard des dessins annexés qui sont donnés à titre d'exemple non limitatif et dans lesquels:
- la figure 1 représente schématiquement le principe de fonctionnement d'un système selon l'invention,
- la figure 2 représente de façon détaillée l'interface entre deux modules dans un mode de réalisation particulier de l'invention,
- la figure 3 représente une partie d'un module destiné à être utilisé dans un système selon l'invention (bus local, étages tampons bidirectionnels, automate et bus inter-modules),
- la figure 4 représente un diagramme de fonctionnement dudit automate,
- la figure 5 représente un détail du diagramme de la figure 4,
- la figure 6 représente schématiquement un exemple d'équipement de télécommunications selon l'invention,
- la figure 7 représente schématiquement un exemple de module destiné à être utilisé dans un équipement tel que décrit sur la figure 6.

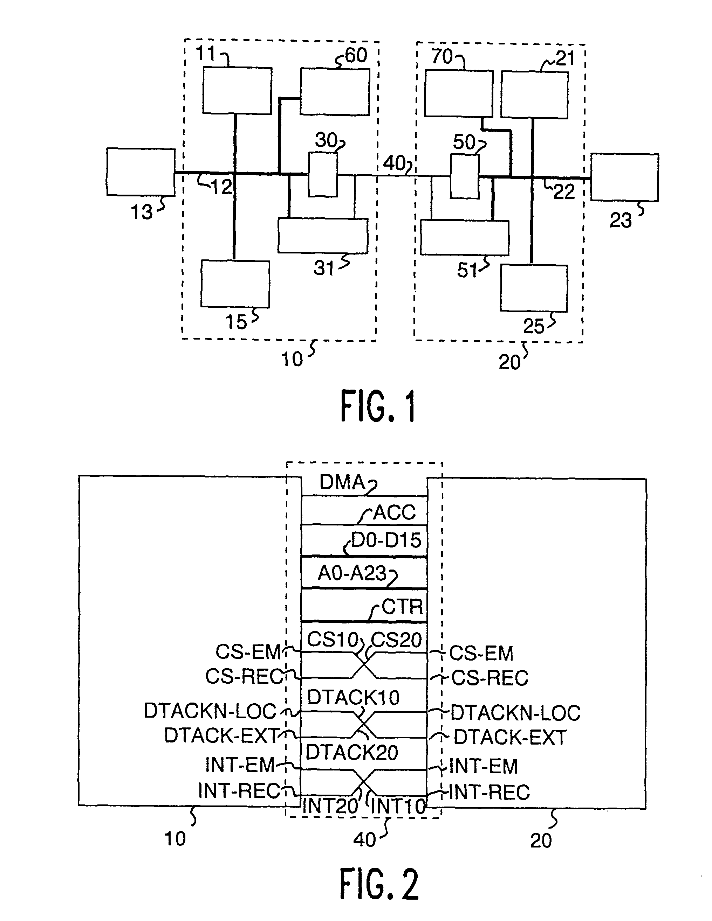

La figure 1 est une représentation schématique d'un système selon l'invention à base de deux modules 10 et 20 constitués chacun à partir d'un processeur et d'un bus local desservant plusieurs périphériques (dans la suite, pour la simplicité de l'exposé, on se contentera de décrire une interconnexion de deux modules, mais ce choix n'est pas restrictif).

D'après la figure 1, le module 10 comporte un processeur 11 et un bus local 12 desservant d'une part un périphérique 13 et d'autre part une mémoire 15. Le bus 12 est relié par un étage tampon bidirectionnel 30 à un bus inter-module 40, et l'étage tampon bidirectionnel 30 est commandé par un automate 31 qui échange des données avec le bus local 12 et avec le bus inter-modules 40. De même, le module 20 comporte un processeur 21 et un bus local 22 desservant d'une part un périphérique 23 et d'autre part une mémoire 25. Le bus 22 est relié par un étage tampon bidirectionnel 50 au bus inter-module 40, et l'étage tampon bidirectionnel 50 est commandé par un automate 51 qui échange des données avec le bus local 22 et avec le bus inter-modules 40.

Lorsque le module 20 cherche à accéder à un périphérique d'un autre module (le module 10 par exemple), l'automate 31 déconnecte temporairement le processeur 11 du bus 12 au profit du processeur 21, et met les bus 12 et 22 en communication directe via les étages tampons bidirectionnels 30 et 50 de telle sorte que les périphériques du module 10 apparaissent comme des périphériques supplémentaires du module 20, et que l'échange de données puisse avoir lieu. En revanche, lorsqu'il n'y a pas d'échange, chaque processeur travaille indépendamment en local sur son bus en accédant aux périphériques qui lui sont connectés.

Dans un mode de réalisation préférentiel d'un système selon l'invention, chaque module comporte de plus un périphérique spécifique (60 et 70 respectivement) capable de transférer des flots d'informations par accès dits accès DMA en prenant la main aux processeurs 11 et 21 respectivement. Ce mode de réalisation présente l'avantage de permettre le transfert de plusieurs informations en un seul accès au bus local distant et par conséquent limite la part qui résulte des mécanismes de prise du bus local dans la durée totale du cycle. Ainsi, chaque bus local peut être utilisé soit par un processeur local ou distant, soit par un périphérique local ou distant dédié aux accès DMA.

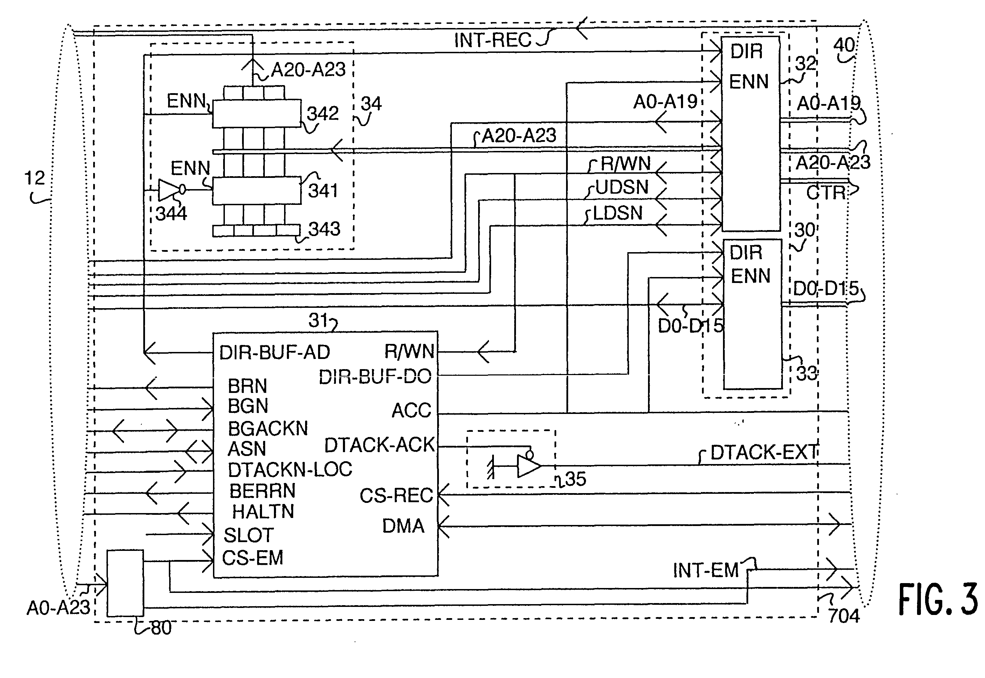

La figure 2 représente l'interface entre les deux modules 10 et 20 identiques, le module 10 étant par ailleurs décrit sur la figure 3.

Dans l'exemple qui va maintenant être décrit les processeurs 11 et 21 sont de la famille des 68000 de Motorola.

D'après la figure 2, les modules 10 et 20 sont reliés par un ensemble de fils qui constitue le bus inter-module 40. Un fil ACC fournit un signal d'activation ou de désactivation des étages tampons bidirectionnels 30 et 50 de chaque module. Une ligne A0-A23 transporte les codes d'adresses du processeur maître. Une ligne D0-D15 permet l'échange des codes de données entre les deux modules. Une ligne de contrôle CTR transporte trois fils: un fil R/WN qui caractérise le type d'accès en lecture ou en écriture et permet notamment de configurer la direction des étages tampons bidirectionnels de données, et deux fils UDSN et LDSN (de l'anglais Upper Data Strobe Not et Lower Data Strobe Not) qui définissent les bits valides parmi les 16 bits de données. Un fil DMA indique si le cycle en cours fait ou non partie d'un accès DMA. Deux fils CS10 et CS20 sont connectés d'une part entre une borne CS-EM du module 10 et une borne CS-REC du module 20, et d'autre part entre une borne CS-EM du module 20 et une borne CS-REC du module 10 afin de transporter les signaux de demande de prise de bus entre les deux modules. Deux fils DTACK10 et DTACK20 (de l'anglais Data Transfert Acknowledge) sont connectés entre d'une part une borne DTACK-EXT du module 10 et une borne DTACKN-LOC du module 20, et d'autre part une borne DTACK-EXT du module 20 et une borne DTACKN-LOC du module 10, de façon à transmettre les signaux de fin de cycle entre modules. Enfin, deux fils INT10 et INT20 sont connectés entre d'une part une borne INT-EM du module 10 et une borne INT-REC du module 20, et d'autre part une borne INT-EM du module 20 et une borne INT-REC du module 10, afin de transmettre des signaux d'interruption entre modules.

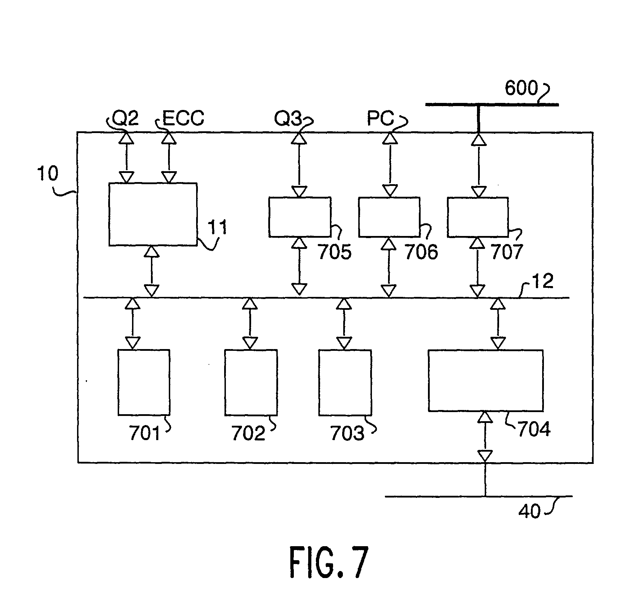

La figure 3 ne représente que les éléments du module 10 qui interviennent pour la mise en oeuvre de l'invention, c'est-à-dire un automate 31 qui est dans cet exemple de réalisation un EP910 ou un EPL7032 fabriqué par la société Altera, un étage tampon bidirectionnel 30 qui est constitué d'un étage tampon bidirectionnel d'adresse 32 et un étage tampon bidirectionnel de données 33, formés chacun à partir de composants 74ABT245 fabriqués par Philips Semiconductors, un bus local 12, un bus inter-module 40. Une vue globale d'un exemple de module est donnée sur la figure 7.

L'automate 31 est doté des bornes suivantes pour émettre ou recevoir des signaux sur ou en provenance du bus local:
- une borne DTACKN-LOC destinée à recevoir du processeur un signal indiquant que le transfert de données est achevé,
- une borne d'entrée BGN (de l'anglais Bus Grant Not) pour recevoir un signal indiquant que le processeur va libérer le bus à la fin du cycle en cours,
- une borne de sortie BRN (de l'anglais Bus Request Not) pour émettre vers le processeur 11 un signal lui indiquant qu'un autre processeur veut devenir maître du bus local 12; cet autre processeur attend l'activation du signal BGN et la libération du bus local 12,
- deux bornes de sortie BERRN (de l'anglais Bus Error Not) et HALTN qui délivrent deux signaux qui sont utilisés ensemble pour provoquer un cycle de relance du processeur lorsqu'il y a un problème pour le cycle en cours,
- une borne d'entrée/sortie BGACKN (de l'anglais Bus Grant Acknoledge Not) d'un signal qui est utilisé, au niveau du module maître (le module 20 dans cet exemple) pour indiquer qu'un périphérique spécialisé (60 par exemple) est maître du bus local 22 et qu'un accès DMA est en cours, et au niveau du module esclave (le module 10 dans cet exemple) pour indiquer que l'automate 31 prend la main sur le bus local 12,
- une borne d'entrée/sortie ASN (de l'anglais Adress Strobe Not) d'un signal qui indique la présence d'une adresse valide sur le bus, constituant ainsi un signal de début de cycle,
- une borne d'entrée R/WN (de l'anglais Read/Write Not) pour recevoir un signal qui indique s'il s'agit d'un cycle de lecture ou d'écriture.

L'automate 31 est par ailleurs doté de bornes DMA et ACC auxquels sont connectés les fils de même nom du bus inter-module. Il est de plus doté:
- d'une borne CS-REC connectée à la borne du même nom du module 10,
- d'une borne CS-EM qui reçoit un signal de demande de prise du bus local et qui est connectée à la borne du même nom du module 10; dans le mode de réalisation qui est décrit, la mémoire est organisée en zones, chaque zone étant attribuée à un périphérique donné. Ce signal est donc issu d'un décodeur d'adresses 80 qui reçoit en entrée la ligne A0-A23 et sélectionne en sortie le périphérique concerné. La borne CS-EM est donc reliée aux sorties du décodeur d'adresses qui correspondent aux périphériques du module 20.
- d'une borne DIR-BUF-DO qui est connectée à l'étage tampon bidirectionnel de données 33 et qui délivre un signal permettant de positionner la direction de l'étage tampon bidirectionnel de données selon la situation du module (maître ou esclave) et le type d'accès (en lecture ou en écriture),
- d'une borne DIR-BUF-AD qui est connectée à l'étage tampon bidirectionnel d'adresses 32 d'une part, et à un circuit 34 d'autre part dont le rôle sera expliqué par la suite; cette borne délivre de même un signal permettant de positionner la direction de l'étage tampon bidirectionnel d'adresses selon la situation du module (maître ou esclave),
- d'une borne DTACK-ACK qui est reliée à la borne DTACK-EXT du module 10 par l'intermédiaire d'un circuit 35 dont le rôle sera décrit par la suite,
- et d'une borne SLOT qui indique lequel des deux modules est prioritaire par rapport à l'autre: en effet, chacun des deux modules étant relié au bus inter-module par une fente de connexion, sa priorité est donnée dans cet exemple de réalisation par le numéro de ladite fente de connexion (0 ou 1).

L'étage tampon bidirectionnel de données 33 est doté des bornes suivantes:
- une borne ENN qui est connectée à la borne ACC de l'automate 31 pour recevoir un signal d'activation ou de désactivation,
- deux ensembles de 16 bornes, dites respectivement bornes A et bornes B, les bornes A étant reliées au bus local et les bornes B au bus inter-module, et destinées à recevoir des données (dans la pratique, le composant 74ABT245 qui est utilisé ne comportant que deux ensembles de 8 bornes chacun, cet étage tampon bidirectionnel est en fait constitué de deux composants 74ABT245),
- une borne DIR qui est connectée à la borne DIR-BUF-DO de l'automate 31 et qui permet de sélectionner la direction de fonctionnement de l'étage tampon bidirectionnel: lorsque le signal qu'elle reçoit est actif l'étage tampon bidirectionnel transmet les données de ses bornes A vers ses bornes B, et vice-versa lorsqu'il est inactif.

L'étage tampon bidirectionnel d'adresses 32 est doté des bornes suivantes:
- une borne ENN qui est connectée à la borne ACC de l'automate 31 pour recevoir un signal d'activation ou de désactivation,
- deux ensembles de 27 bornes, dites respectivement bornes A et bornes B, les bornes A étant reliées au bus local et les bornes B au bus inter-module. Les 20 premières bornes sont destinées à recevoir les 20 premiers fils d'adresse A0 à A19, les trois suivantes sont destinées à recevoir trois fils d'adresse A20 à A23 qui sont fournis par le circuit 34, et enfin les trois dernières à recevoir les signaux de contrôle R/WN, UDSN et LDSN qui caractérisent le type d'accès et déterminent les bits valides parmi les 16 bits de données.
- une borne DIR qui est connectée à la borne DIR-BUF-AD de l'automate 31 et qui permet de sélectionner la direction de fonctionnement de l'étage tampon bidirectionnel, de telle sorte que lorsque le signal qu'elle reçoit est actif l'étage tampon bidirectionnel transmette les données de ses bornes A vers ses bornes B, et vice-versa lorsqu'il est inactif.

Dans la pratique, ces étages tampons bidirectionnels sont réalisés à partir de plusieurs portes 74ABT245.

Le circuit 34 permet de réaliser un fonctionnement par page. Il est composé de deux portes 341 et 342 dotées chacune de quatre entrées et de quatre sorties, ainsi que d'une borne de commande ENN. Les quatre entrées de la porte 342 et les quatre sorties de la porte 341 sont reliées aux bornes A20 à A23 de l'étage tampon bidirectionnel d'adresses 32. Les quatre entrées de la porte 341 sont connectée à un registre 343 qui fournit les quatre bits d'adresse A20 à A23 définissant ainsi une page de 1 Moctet, et sa borne de commande ENN est relié à la borne DIR-BUF-AD de l'automate 31 par l'intermédiaire d'un inverseur 344. Ainsi la porte 341 est activée lorsque le module est en situation "maître". Les sorties de la porte 342 sont reliées au bus local, et sa borne de commande est reliée directement à la borne DIR-BUF-AD de l'automate 31 de telle sorte que la porte 342 est activée lorsque le module est en situation "esclave".

Dans la pratique, les portes 341 et 342 sont réalisées à partir d'un circuit 74F244 fabriqué par Philips Semiconductors.

Le circuit 35 permet de gérer les fins de cycle. Il est constitué à partir d'une porte à trois états qui est dotée d'une entrée, d'une commande et d'une sortie. L'entrée est connectée à la masse. La commande est connectée à la borne DTACK-ACK de l'automate 31 et la sortie est reliée à la borne DTACK-EXT du module 10. Ainsi, lorsque le module est en situation "esclave", le signal DTACK-EXT est activé dès que la commande DTACK-ACK passe au niveau actif, ce qui permet de dissocier simplement la phase d'acquittement local provoqué par le périphérique vis-à-vis de l'automate (DTACKN-LOC) et la phase d'acquittement externe provoquée par l'automate vis-à-vis du bus inter-module. L'acquittement local nécessite en effet la mise en place d'un mécanisme particulier qui gère de façon distincte les cycles de lecture et les cycles d'écriture pour le module esclave: lors d'un cycle d'écriture, il est nécessaire de provoquer une fin de cycle local de façon à garantir que les données soient échantillonnées. C'est seulement ensuite que le signal de fin de cycle doit être transmis sur le bus inter-module. Lors d'un cycle de lecture en revanche, les données à lire doivent être maintenues sur le bus local jusqu'à l'acquittement externe.

Enfin, la borne INT-REC du module 10 est connectée à une borne de contrôle d'interruption du processeur 11 et la borne INT-EM est connectée à une sortie du décodeur 80 de telle sorte qu'une adresse prédéterminée soit dédiée au déclenchement d'une interruption.

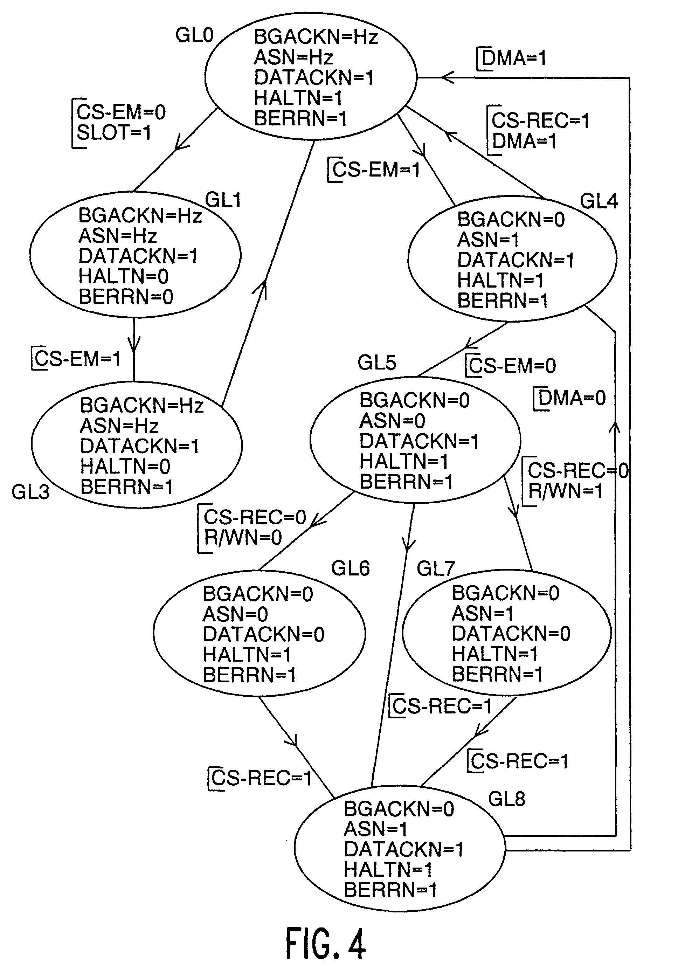

Le fonctionnement de l'automate 31 lorsque le module 10 est en situation d'esclave va maintenant être décrit en se reportant à l'organigramme de la figure 4. Dans la suite, on assimile les noms de signaux aux noms des bornes de l'automate 31 sur lesquelles ils sont délivrés.

L'état de repos de l'automate (pas de demande d'accès au bus local) est l'état GL0 qui est caractérisé par les valeurs:
BGACKN=Hz
ASN=Hz
DTACKN-L0C=1
HALTN=1
BERRN=1
où Hz indique un état inactif sous haute impédance, la valeur 1 correspond à un état inactif et la valeur 0 à un état actif.

Lorsque l'automate reçoit une demande d'accès à son bus local (CS-REC=0) trois cas sont à distinguer:
- premier cas:
   Si CS-EM=0 et SLOT=1, il y a conflit entre les deux modules qui font chacun une demande d'accès au bus local du module distant. Le signal SLOT permet de déterminer la priorité du module 10. On considère dans cet exemple de réalisation que le module connecté par la fente 0 est prioritaire par rapport au module connecté par la fente 1. Lorsque SLOT=1, le module 10 n'est donc pas prioritaire, et l'automate 31 passe à l'état GL1 pour résoudre le conflit.
- deuxième cas:
   Si CS-EM=0 et SLOT=0, le module 10 est prioritaire et l'automate 31 attend la disparition du conflit, c'est-à-dire le passage du signal CS-REC au niveau inactif (CS-REC=1).
- troisième cas:
   Si CS-EM=1, le module 10 n'est pas en train de faire une demande d'accès au bus 22, l'automate passe à l'état GL4 dès que le bus 12 est libre, c'est-à-dire dès que BGN=0, BGACKN=1 et ASN=1.

Dans l'état GL1, l'automate effectue un cycle de relance. Cet état est caractérisé par les valeurs suivantes:
BGACKN=Hz
ASN=Hz
DTACKN-LOC=1
HALTN=0
BERRN=0
Le signal BERRN indique au processeur l'existence d'un problème pour le cycle en cours, et il interagit avec le signal HALTN pour demander une relance. Lorsque CS-EM=1, l'automate passe à l'état GL3.

L'état GL3 correspond à une fin du cycle de relance et est caractérisé par les valeurs suivantes:
BGACKN=Hz
ASN=Hz
DTACKN-L0C=1
BERRN=1
HALTN=0
L'automate retourne ensuite à l'état de repos GL0 sans condition.

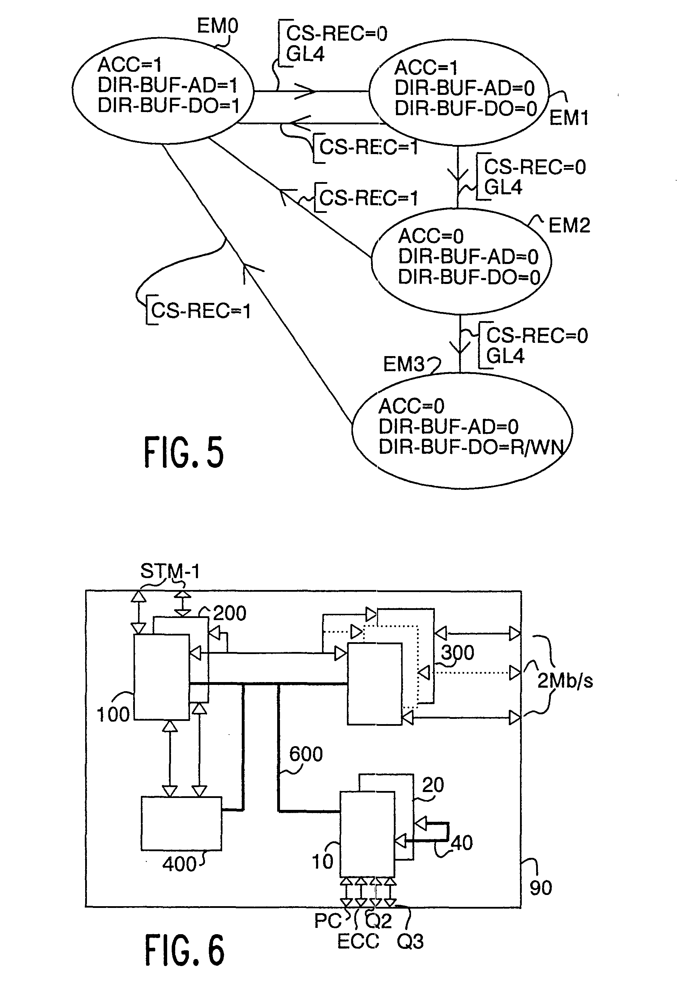

L'état GL4 correspond à la prise du bus local 12 par le module distant 20 (BRN=CS-REC) et est caractérisé par les valeurs suivantes:
BGACKN=0
ASN=1
DTACKN-LOC=1
BERRN=1
HALTN=1
Puis l'automate reste en attente jusqu'à ce que les étages tampon bidirectionnels d'adresses et de données soient activés. L'activation des étages tampons bidirectionnels sera expliquée par la suite à l'aide de l'organigramme de la figure 5. L'état d'activation de ces étages tampons est caractérisé par les valeurs:
ACC=0
DIR-BUF-AD=0
DIR-BUF-DO=R/WN
Si CS-REC=0, l'automate passe à l'état GL5 dès que les étages tampons sont activés. En revanche, si CS-REC=1 et si DMA=1 (c'est-à-dire si le cycle en cours ne fait pas partie d'un accès DMA), l'automate retourne à l'état GL0. Enfin, entre deux transferts au cours d'un cycle DMA, on peut avoir CS-REC=1 et DMA=0. Dans ce cas, l'automate reste en attente jusqu'à ce que CS-REC=0.

L'état GL5 correspond a l'accès au bus local et est caractérisé par les valeurs suivantes:
BGACKN=0
ASN=0
DTACKN-L0C=1
BERRN=1
HALTN=1
Le début du cycle est donc déclenché; l'adresse et les signaux de contrôle sont échantillonnés, le périphérique adressé est sélectionné de telle sorte que les données puissent être mises sur le bus s'il s'agit d'un cycle de lecture ou échantillonnées s'il s'agit d'un cycle d'écriture. Lorsque le périphérique émet un signal de fin de cycle (DTACKN-LOC=0) l'automate passe à l'état GL8 si CS-REC=1, à l'état GL6 si CS-REC=0 et R/WN=0 et à l'état GL7 si CS-REC=0 et R/WN=1.

L'état GL6 correspond à un cycle de lecture et est caractérisé par les valeurs suivantes:
BGACKN=0
ASN=0
DTACKN-L0C=0
BERRN=1
HALTN=1
Dans cet état, l'automate émet un signal d'acquittement vers le module 20 (DTACK-ACK=0) tout en maintenant les données sur le bus local (ASN=0). Puis sur réception du signal CS-REC=1, l'automate passe à l'état GL8.

L'état GL7 correspond à un cycle d'écriture et est caractérisé par les valeurs suivantes:
BGACKN=0
ASN=1
DTACKN-L0C=0
BERRN=1
BERRN=1 HALTN=1
Dans cet état, l'automate n'émet un signal d'acquittement vers le module 20 qu'après avoir émis un signal de fin de cycle local (ASN=1) vers le périphérique afin de provoquer l'écriture des données. Puis sur réception du signal CS-REC=1, l'automate passe à l'état GL8.

L'état GL8 est caractérisé par les valeurs suivantes:
BGACKN=0
ASN=1
DTACKN-L0C=1
BERRN=1
HALTN=1
Cet état correspond à la fin du cycle d'accès inter-module et à l'attente de la libération des étages tampons bidirectionnels d'adresses et de données. Cet état de libération sera décrit sur la figure 5; il est caractérisé par les valeurs:
ACC=1
DIR-BUF-AD=1
DIR-BUF-D0=1
Lorsque l'état de libération est atteint, si DMA=1 (le cycle en cours ne fait pas partie d'un accès DMA) l'automate passe à l'état GL0. En revanche si DMA=0, il passe à l'état GL4.

On va maintenant décrire les mécanismes d'activation et de libération des étages tampons bidirectionnels d'adresses et de données en se reportant à la figure 5.

L'état EM0 correspond à un état de repos dans lequel l'automate attend une prise du bus local (état GL4). Cet état est caractérisé par les valeurs suivantes:
ACC=1
DIR-BUF-AD=1
DIR-BUF-D0=1
Les étages tampons sont dirigés vers l'extérieur. Lorsque l'automate est dans l'état GL4 et qu'il reçoit un signal CS-REC=0, il passe à l'état EM1.

L'état EM1 consiste à diriger les étages tampons vers l'intérieur. Il est donc caractérisé par les valeurs suivantes:
ACC=1
DIR-BUF-AD=0
DIR-BUF-D0=0
Lorsque l'automate est dans l'état GL4 et qu'il reçoit le signal CS-REC=0, il passe ensuite à l'état EM2. En revanche, si CS-REC=1, il retourne à l'état EM0

L'état EM2 consiste à valider les étages tampons. Il est donc caractérisé par les valeurs suivantes:
ACC=0
DIR-BUF-AD=0
DIR-BUF-DO=0
Lorsque l'automate est dans l'état GL4 et qu'il reçoit le signal CS-REC=0, il passe à l'état EM3. En revanche, si CS-REC=1, il retourne à l'état EM0.

L'état EM3 consiste à diriger l'étage tampon bidirectionnel de données en fonction du signal R/WN puis à attendre la fin de l'accès local. Il est donc caractérisé par les valeurs suivantes:
ACC=0
DIR-BUF-AD=0
DIR-BUF-D0=R/WN
Dès qu'il reçoit un signal CS-REC=1, l'automate retourne à l'état EMO.

Il est important de noter que, pour un fonctionnement correct d'un tel automate, il est nécessaire de resynchroniser (via une bascule par exemple) les signaux CS-REC et DTACK-LOC reçu par le module 10 en provenance du module 20.

D'autre part, le module qui vient d'être décrit est avantageusement réalisé à partir d'un processeur 68302 de Motorola. Un tel processeur, qui est à base d'un 68000 de Motorola, présente l'avantage d'intégrer de nombreuses fonctions telles qu'un décodeur d'adresses, un périphérique dédié aux accès DMA...

La figure 6 représente un multiplexeur de données en hiérarchie synchrone qui utilise un système de traitement d'informations tel que décrit ci-dessus. Un tel équipement est décrit dans l'article "The ADM 155 and the setting up of synchronous access networks" de N. Dupré La Tour, Y. Guedes et B. Salle, publié dans la revue Commutation & transmission n°1, 1992.

D'après la figure 6, un tel équipement 90 comporte notamment:
- deux modules 100 et 200 présentant une interface STM-1 et dont le rôle essentiel est d'assembler et de désassembler les informations qu'ils reçoivent ou qu'ils émettent sur un support de transmission à 155Mb/s,
- une pluralité de modules 300 présentant une interface à 2Mb/s et dont le rôle est d'assembler en une trame synchrone des données reçues à un débit de 2Mb/s ,
- au moins un module de transfert 400 dont le rôle est de transférer des conduits virtuels de rang inférieur entre les interfaces STM-1,
- deux modules de supervision 10 et 20 qui sont reliés par un bus inter-module 40 et dont le rôle est notamment de gérer la configuration de l'équipement, les alarmes et la qualité des communications, les différents traitements étant répartis entre les deux modules. Ces modules de supervision sont en outre dotés d'une part d'une interface de type V24, notée PC, pour une connexion vers un poste local qui assure la gestion de l'équipement, et d'autre part, pour assurer la connexion vers un système global de gestion du réseau, d'une interface Q3 vers un réseau local de type Ethernet, d'une interface Q2 vers un réseau de type X25 et de lignes ECC (de l'anglais Embeded communication channel) pour une connexion vers des cartes supervision d'équipements voisins. Les modules supervision comportent de plus une interface de type V24 vers un bus 600 interne à l'équipement de façon à assurer la communication entre les différents modules qui viennent d'être mentionnés.

La figure 7 donne une représentation détaillée du module 10. Il comporte un ensemble à microprocesseur 11 formé à partir d'un processeur de la famille des 68000 de Motorola, qui est doté d'une interface Q2 vers un réseau de type X25, et d'au moins une interface ECC vers des modules supervision d'autres équipements, et qui est connecté au bus local 12. Une mémoire EPROM 701, une mémoire de sauvegarde 702 et une mémoire dynamique 703 constituent des périphériques dudit module et sont également connectée au bus local, de même que l'ensemble 704 des circuits de la figure 3 qui gèrent l'accès au bus inter-module 40. Le bus local est par ailleurs relié à un circuit 705 de gestion d'une interface de type Q3 vers un réseau local de type Ethernet, à un circuit 706 de gestion d'une interface de type V24 vers un ordinateur local assurant la gestion de l'équipement, et à un circuit 707 de gestion de l'accès au bus interne 600 de l'équipement.

Il va de soi que des variantes peuvent être apportées au mode de réalisation qui vient d'être décrit. Notamment, les périphériques DMA 60 et 70 ne sont pas indispensables au fonctionnement de l'invention; ils permettent toutefois d'apporter une amélioration aux performances du système.

De même, on a décrit un mécanisme selon lequel la priorité des différents modules est fonction du numéro de la fente de connexion par laquelle ils sont connectés. Ce mécanisme présente l'avantage d'être particulièrement simple à mettre en oeuvre, mais d'autres mécanismes sont utilisables tel par exemple qu'un mécanisme de priorité tournante (la priorité est attribuée à un module différent à chaque nouveau conflit, de façon tournante), ou un mécanisme de priorité chaînée (les modules sont chaînés par ordre de priorité et chaque module est doté d'un fil de priorité d'entrée qui délivre un signal indiquant s'il existe un module actif plus prioritaire, et d'un fil de priorité de sortie qui délivre un signal indiquant si le module est le module actif le plus prioritaire). Ce dernier mécanisme est particulièrement intéressant lorsque le système comporte un nombre important de modules.

Enfin, il est bien entendu que l'invention est applicable à tout type de processeur qu'elle que soit la largeur de son bus.

## Revendications

1. Système de traitement d'informations comportant une pluralité de modules (10; 20) qui sont notamment constitués à partir d'un processeur (11; 21) et d'un bus local (12; 22) desservant différents périphériques (13, 15; 23, 25),
caractérisé en ce qu'il comporte un bus inter-modules (40) destiné à servir de lien temporaire entre deux modules (10; 20), et connecté à chaque module par l'intermédiaire d'au moins un étage tampon bidirectionnel (30; 50),
et en ce que lesdits modules (10; 20) sont dotés de moyens permettant à un processeur de tout premier module (10; 20) de devenir temporairement maître du bus local (22; 12) de tout second module (20; 10) de façon à accéder directement aux périphériques (23, 25; 13, 15) dudit second module (20; 10).

2. Système selon la revendication 1, caractérisé en ce que chaque module (10; 20) comporte notamment:
- des moyens pour émettre un signal de demande d'accès au bus local (22; 12) d'un module tiers (20; 10) lorsqu'une adresse présente sur son propre bus local (12; 22) correspond à l'adresse d'un périphérique (23, 25; 13, 15) dudit module tiers (20; 10),
- un automate de gestion de son propre bus local.

3. Système selon l'une des revendications 1 ou 2, caractérisé en ce que lesdits modules (10; 20) sont identiques.

4. Système selon l'une des revendications 1 à 3, caractérisé en ce qu'au moins un desdits modules (10; 20) comporte un périphérique spécifique (60; 70) destiné à se substituer au processeur (11; 21) dudit module (10; 20) pour effectuer des transferts de flots d'informations.

5. Système selon la revendication 4, caractérisé en ce qu'il comporte des moyens de gestion de conflit pour attribuer le bus (12; 22) au module (10; 20) le plus prioritaire.

6. Système selon la revendication 5, caractérisé en ce que chaque module (10; 20) étant relié au bus inter-module (40) par une fente de connexion, sa priorité est fonction du numéro de ladite fente de connexion.

7. Equipement de télécommunications (90) comportant une pluralité de modules (10; 20) qui sont notamment constitués à partir d'un processeur (11; 21) et d'un bus local (12; 22) desservant différents périphériques (13, 15; 23, 25),
caractérisé en ce qu'il comporte un bus inter-modules (40) destiné à servir de lien temporaire entre deux modules, et connecté à chaque module par l'intermédiaire d'au moins un étage tampon bidirectionnel (30; 50),
et en ce que chaque module est doté de moyens permettant à un processeur d'un premier module de devenir temporairement maître du bus local d'un second module de façon à accéder directement aux périphériques dudit second module.

## Patentansprüche

1. Datenverarbeitungssystem mit mehreren Modulen (10; 20), die insbesondere aus einem Prozessor (11; 21) und einem lokalen Bus (12; 22) bestehen, der verschiedene Peripheriegeräte (13, 15; 23, 25) versorgt,
dadurch gekennzeichnet, dass es einen Bus (40) zwischen den Modulen enthält, der als vorübergehende Verbindung zwischen zwei Modulen (10; 20) dienen soll und mit jedem Modul über mindestens eine bidirektionale Pufferstufe (30; 50) verbunden ist,
und dass die genannten Module (10; 20) mit Mitteln ausgerüstet sind, die es einem Prozessor jeglichen ersten Moduls (10; 20) ermöglichen, vorübergehend den lokalen Bus (22; 12) jeglichen zweiten Moduls (20; 10) zu steuern und somit direkten Zugriff auf die Peripheriegeräte (23, 25; 13, 15) des genannten zweiten Moduls (20; 10) zu haben.

2. System nach Anspruch 1, dadurch gekennzeichnet, dass jedes Modul (10; 20) folgendes umfasst:
- Mittel zum Senden eines Anforderungssignals auf Zugriff auf den lokalen Bus (22; 12) eines dritten Moduls (20; 10), wenn eine auf seinem eigenen lokalen Bus (12; 22) vorliegende Adresse der Adresse eines Peripheriegerätes (23, 25; 13, 15) des genannten dritten Moduls (20; 10) entspricht,
- einen Automaten zur Verwaltung seines eigenen lokalen Busses.

3. System nach einem der Ansprüche 1 oder 2, dadurch gekennzeichnet, dass die genannten Module (10; 20) identisch sind.

4. System nach einem der Ansprüche 1 bis 3, dadurch gekennzeichnet, dass mindestens eines der genannten Module (10; 20) ein spezielles Peripheriegerät (60; 70) enthält, das den Prozessor (11; 21) des genannten Moduls (10; 20) ersetzen soll, um die Übertragung von Informationsflüssen durchzuführen.

5. System nach Anspruch 4, dadurch gekennzeichnet, dass es Mittel zum Verwalten von Konflikten enthält, um den Bus (12; 22) dem Modul (10; 20) mit der höchsten Priorität zuzuordnen.

6. System nach Anspruch 5, dadurch gekennzeichnet, dass jedes Modul (10; 20) über einen Slot an einen Bus (40) zwischen den Modulen angeschlossen ist, wobei seine Priorität von der Nummer des genannten Slots abhängt.

7. System zur Nachrichtenübertragung (90), das mehrere Module (10; 20) enthält, die insbesondere aus einem Prozessor (11; 21) und einem lokalen Bus (12; 22) bestehen, der verschiedene Peripheriegeräte (13, 15; 23, 25) versorgt,
dadurch gekennzeichnet, dass es einen Bus (40) zwischen den Modulen enthält, der als vorübergehende Verbindung zwischen zwei Modulen dienen soll und mit jedem Modul über mindestens eine bidirektionale Pufferstufe (30; 50) verbunden ist,
und dass jedes Modul mit Mitteln ausgerüstet ist, die es einem Prozessor eines ersten Moduls ermöglichen, vorübergehend den lokalen Bus eines zweiten Moduls zu steuern und somit direkten Zugriff auf die Peripheriegeräte des genannten zweiten Moduls zu haben.

## Claims

1. An information processing system comprising a plurality of modules (10; 20) which are constituted on the base of a processor (11; 21) and of a local bus (12; 22) which serves various peripherals (13, 15; 23, 25),
characterized in that it comprises an inter-module bus (40) intended to serve as a temporary link between two modules (10; 20), and connected to each module via at least a two-way buffer stage (30; 50),
and in that said modules (10; 20) comprise means enabling a processor of any first module (10; 20) to become temporarily the master of the local bus (22; 12) of any second module (20; 10), so as to have direct access to the peripherals (23, 25; 13, 15) of said second module (20; 10).

2. A system as claimed in Claim 1, characterized in that each module (10; 20) notably comprises:
- means for emitting a request signal for access to the local bus (22; 12) of another module (20; 10) when an address present on its own local bus (12; 22) corresponds to an address of a peripheral (23, 25; 13, 15) of said third module (20; 10),
- a management automaton for its own local bus.

3. A system as claimed in one of the Claims 1 or 2,
characterized in that said modules (10; 20) are identical.

4. A system as claimed in one of the Claims 1 to 3,
characterized in that at least one of said modules (10; 20) comprises a specific peripheral (60; 70) intended to take the place of the processor (11; 21) of said module (10; 20) to perform information stream transfers.

5. A system as claimed in Claim 4,
characterized in that it comprises conflict management means to assign the bus (12; 22) to the module (10; 20) that has the highest priority.

6. A system as claimed in Claim 5,
characterized in that from each module (10; 20) which is connected to the inter-module bus (40) via a connecting slot, its priority is a function of the number of said connecting slot.

7. Telecommunications equipment (90) comprising a plurality of modules (10; 20) which are notably formed by a processor (11; 21) and a local bus (12; 22) which serves various peripherals (13, 15; 23, 25),
characterized in that it comprises an inter-module bus (40) intended to serve as a temporary link between two modules (10; 20), and connected to each module via at least a two-way buffer stage (30; 50),
and in that each module has means enabling a processor of a first module to become temporarily the master of the local bus of a second module, so as to have direct access to the peripherals of said second module.
